(19) Europäisches Patentamt
European Patent Office
Office européen des brevets

(11) Numéro de publication: **0 683 221 A1**

# (12) DEMANDE DE BREVET EUROPEEN

(21) Numéro de dépôt: **95201193.0**

(22) Date de dépôt: **09.05.95**

(51) Int. Cl.[6]: **C11D 3/43**, B01D 12/00, F26B 5/00, C23G 5/028

(30) Priorité: **18.05.94 FR 9406237**

(43) Date de publication de la demande: **22.11.95 Bulletin 95/47**

(84) Etats contractants désignés: **BE ES GB IT**

(71) Demandeur: **SOLVAY (Société Anonyme)**
**Rue du Prince Albert, 33**
**B-1050 Bruxelles (BE)**

(72) Inventeur: **Paulus, Mireille**
**avenue Stienon, 7/3**
**B-1020 Bruxelles (BE)**
Inventeur: **Putteman, Robert**
**Benoit de Donderstraat, 17**
**B-9370 Lebbeke (BE)**
Inventeur: **Barthelemy, Pierre**
**rue Fond du Village, 23A**
**B-1315 Pietrebais (BE)**

(74) Mandataire: **Anthoine, Paul et al**
**SOLVAY**
**Département de la Propriété Industrielle**
**310, rue de Ransbeek**
**B-1120 Bruxelles (BE)**

## (54) Compositions comprenant du 1,1-dichloro-1-fluoroéthane et procédé d'élimination d'eau d'une surface solide.

(57) Compositions à base de 1,1-dichloro-1-fluoroéthane et d'un agent tensioactif comprenant au moins une imidazoline, utilisables pour éliminer de l'eau d'une surface solide.

EP 0 683 221 A1

La présente invention se rapporte à des compositions à base de 1,1-dichloro-1-fluoroéthane et à un procédé d'élimination d'eau d'une surface solide au moyen de ces compositions.

Dans le domaine de l'industrie électrique, électronique, optique et mécanique, notamment au cours de la production de pièces de haute précision, il peut arriver que celles-ci entrent, intentionnellement ou non, en contact avec de l'eau ou de l'humidité. L'eau peut adhérer à la surface de ces pièces et provoquer ensuite certains effets néfastes au cours d'étapes ultérieures de leur mise en oeuvre ou altérer leur qualité. Il est dès lors indispensable, pour de nombreuses pièces de précision, d'être complètement débarrassées de l'eau adhérant à leur surface. Cette opération d'élimination d'eau de la surface peut notamment être réalisée par déplacement de l'eau, au moyen d'un liquide organique dense, non miscible à l'eau et contenant éventuellement un agent tensioactif.

On connaît de nombreuses compositions d'élimination d'eau par déplacement de celle-ci, notamment des compositions à base de 1,1-dichloro-1-fluoroéthane. En particulier, dans la demande de brevet JP-A-05/004004, on décrit des compositions à base de 1,1-dichloro-1-fluoroéthane additionné d'un agent tensioactif, de préférence sélectionné parmi les sels dérivés d'acides monocarboxyliques aliphatiques comprenant de 6 à 10 atomes de carbone et de monoamines aliphatiques primaires comprenant de 8 à 12 atomes de carbone.

Lorsqu'on utilise ces compositions connues pour éliminer de l'eau d'une surface solide, de très petites gouttelettes d'eau sont néanmoins souvent retenues à la surface. De plus, ces compositions forment parfois des émulsions avec l'eau, ce qui rend difficile la séparation ultérieure de la composition et de l'eau déplacée. Ces compositions s'épuisent très vite; après quelques cycles d'utilisation de ces compositions pour l'élimination de l'eau de la surface de pièces, elles perdent toute leur efficacité.

L'invention a pour objet des compositions comprenant du 1,1-dichloro-1-fluoroéthane et un agent tensioactif, présentant une bonne aptitude à l'élimination d'eau de surfaces solides, sans présenter les inconvénients sus-mentionnés des compositions connues.

L'invention concerne dès lors des compositions comprenant du 1,1-dichloro-1-fluoroéthane et un agent tensioactif, caractérisées en ce que l'agent tensioactif comprend au moins une imidazoline.

Par imidazoline on entend désigner tout composé organique comprenant une structure

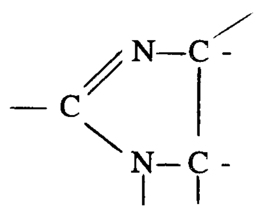

Selon une forme de réalisation préférée des compositions selon l'invention, l'imidazoline répond à la formule

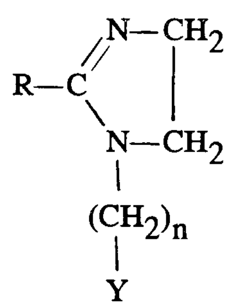

dans laquelle R représente une chaîne alklyle ou alcènyle, Y représente un groupement hydroxyle ou amino et n est un nombre entier au moins égal à 1. Dans cette forme de réalisation préférée des compositions selon l'invention, le nombre d'atomes de carbone dans la chaîne alklyle ou alcènyle R ne dépasse pas en général 25, de préférence 20. Les imidazolines dans lesquelles R est une chaîne alklyle ou alcènyle comprenant au moins 6, de préférence au moins 10, atomes de carbone sont particulièrement préférées. Tout particulièrement préférées sont les imidazolines dans lesquelles R comprend 11 ou 17 atomes de carbone. Dans cette forme de réalisation préférée des compositions selon l'invention, le nombre entier n ne dépasse pas en général 20, de préférence 12. Les imidazolines dans lesquelles n est égal à 2 sont

particulièrement préférées. Les imidazolines dans lesquelles R comprend 11 ou 17 atomes de carbone et n est égal à 2 sont particulièrement avantageuses, particulièrement celles dans lesquelles R comprend 17 atomes de carbone, n est égal à 2 et Y est un groupement amino.

L'imidazoline utilisée dans les compositions selon l'invention, peut être sous la forme de base libre ou sous la forme de sel mono- ou dicarboxylate. Dans le cas où l'imidazoline est sous la forme de sel mono- ou dicarboxylate, la partie carboxylate est de préférence dérivée d'un acide gras, saturé ou insaturé, contenant de 4 à 22 atomes de carbone. De bons résultats ont été obtenus avec les oléates et les laurates. Selon une forme de réalisation avantageuse des compositions selon l'invention, l'imidazoline est sous la forme de base libre ou sous la forme de sel monocarboxylate.

Des imidazolines utilisables dans cette forme de réalisation des compositions selon l'invention, sont bien connues, et peuvent notamment être synthétisées par réaction, à haute température, d'acides gras, saturés ou insaturés, répondant à la formule RCOOH, avec des éthylènediamines substituées de formule $NH_2-CH_2-CH_2-NH-(CH_2)_n-Y$. On les trouve également dans le commerce, notamment sous les noms de SERVAMIN®KOO 360 et SERVAMIN®KOO 330 (vendus par la firme SERVO), de IMIDAZOLINE 18NH, IMIDAZOINE 18OH, IMIDAZOLINE 12NH et IMIDAZOLINE 12OH (vendus par la firme LAKELAND) et de MIRAMINE®HDO (vendu par la firme RHONE-POULENC).

Dans les compositions selon l'invention, la teneur en imidazoline est avantageusement au moins égale à 0,001 %, de préférence 0,01 %, en poids par rapport au poids du 1,1-dichloro-1-fluoroéthane. La teneur en imidazoline n'excède pas généralement 5 %, de préférence 1 %, en poids par rapport au poids du 1,1-dichloro-1-fluoroéthane.

Les compositions selon l'invention peuvent contenir, en plus du 1,1-dichloro-1-fluoroéthane et de l'agent tensioactif, d'autres composés, notamment des hydrocarbures halogénés, des alcools tels que le méthanol, l'éthanol et le décanol, ou des esters tels que l'acétate de méthyle. Dans ce cas, la teneur en autres composés ne dépasse pas en général 25 %, de préférence 10 % en poids par rapport au poids du 1,1-dichloro-1-fluoroéthane.

Les compositions selon l'invention peuvent contenir, en plus des composés décrits plus haut, des additifs permettant d'améliorer les performances des compositions lors de leur utilisation, tels que des stabilisants, des désémulsionnants et/ou des anti-mousses.

Dans les compositions de l'invention, l'agent tensioactif peut contenir, en plus de l'imidazoline, un ou plusieurs autres agents tensioactifs.

Les compositions constituées essentiellement de 1,1-dichloro-1-fluoroéthane et d'au moins une imidazoline sont préférées.

Les compositions selon l'invention sont des compositions liquides qui sont particulièrement bien adaptées pour déplacer de l'eau de surfaces solides. Elles satisfont en effet aux critères les plus sévères applicables aux compositions utilisées pour éliminer de l'eau de surfaces solides, par déplacement de celle-ci. Ainsi, elles sont particulièrement efficaces pour déplacer plus de 70 %, généralement au moins 95 %, voire la totalité de l'eau présente sur une surface solide. Le déplacement de l'eau est très rapide. Dans cette application, les compositions selon l'invention présentent l'avantage qu'elles ne forment pas d'émulsion avec l'eau, mais favorisent au contraire la formation de deux phases superposées, dont l'une (la phase inférieure) est constituée essentiellement par la composition selon l'invention dans laquelle un peu d'eau peut éventuellement être dissoute et dont l'autre (la phase supérieure) est constituée essentiellement par l'eau déplacée. Cela permet une séparation ultérieure simple entre l'eau déplacée et la composition. Les compositions selon l'invention présentent l'avantage supplémentaire qu'elles se prêtent à un grand nombre d'utilisations successives, sans que leur constitution subisse une modification sensible. L'agent tensioactif n'est en effet pas extrait significativement des compositions par l'eau qui est déplacée et séparée ultérieurement de celles-ci.

Les compositions selon l'invention conviennent pour le séchage d'une grande variété de matériaux différents. Elles conviennent notamment pour le séchage de pièces ou de matériaux en métal, en verte, en céramique, en pierres précieuses ou en plastique.

L'invention concerne dès lors également un procédé d'élimination d'eau d'une surface solide, qui se caractérise en ce qu'on traite la surface avec une composition selon l'invention.

Le procédé selon l'invention s'applique indifféremment aux surfaces humides, aux surfaces sur lesquelles sont présentes des gouttelettes d'eau, ainsi qu'aux surfaces complètement recouvertes d'un film d'eau.

Pour traiter la surface solide avec la composition selon l'invention, on peut par exemple la soumettre à une pulvérisation, à une aspersion, à un badigeonnage par la composition ou à une immersion dans un bain de la composition. La quantité optimale de composition à utiliser dépend notamment des dimensions de la pièce traitée, de la quantité d'eau à éliminer et du mode de traitement mis en oeuvre. Elle peut être

déterminée aisément dans chaque cas particulier par un travail de routine. Lorsque la technique d'immersion est utilisée, la composition peut être agitée par tout moyen approprié et l'action de la composition peut être renforcée, par exemple par application d'ultrasons.

Le procédé selon l'invention peut être mis en oeuvre à toute température comprise entre le point de solidification de l'eau et le point d'ébullition de la composition. Le temps de traitement n'est pas critique. Pour des raisons pratiques, il est généralement conseillé de mettre la surface à traiter en contact avec la composition pendant une durée d'environ une minute, bien que des temps de traitement plus courts ou plus longs puissent être utilisés, selon les caractéristiques de la surface à traiter. En général, le temps de traitement est d'au moins 5 secondes, le plus souvent d'au moins 30 secondes. En principe, il n'y a pas de limite supérieure à la durée du traitement. Habituellement toutefois, le temps de traitement ne dépasse pas 10 minutes. Le plus souvent, il ne dépasse pas 5 minutes.

Selon une forme de réalisation préférée du procédé selon l'invention, on traite la surface solide par immersion dans un bain de la composition. Dans ce cas, le bain est, d'une manière particulièrement préférée, à l'ébullition.

A l'issue du traitement avec la composition, la surface solide est le plus souvent rincée au moyen d'un solvant non aqueux, mis en oeuvre sous forme liquide ou gazeuse. Du 1,1-dichloro-1-fluoroéthane peut être utilisé dans ce but.

Les exemples non limitatifs qui suivent sont donnés à titre d'illustration.

<u>Exemple 1R</u> (de comparaison)

Une pièce en polyfluorure de vinylidène (PVDF) ayant une forme parallèlipipédique (30 x 20 x 10 mm) et percée de trous d'un diamètre de 1 mm a été immergée dans de l'eau, de façon à en remplir les trous. La pièce a ensuite été plongée dans un bain constitué de 1,1-dichloro-1-fluoroéthane, à l'ébullition. Après 15, 30, 45 et 60 secondes d'immersion, on a sorti la pièce du bain et on a déterminé par un examen visuel le nombre de trous exempts d'eau. Les résultats de ces observations sont rassemblés dans le tableau I, où la proportion de trous exempts d'eau est exprimée en pourcentage du nombre total de trous.

Dans cet exemple, le 1,1-dichloro-1-fluoroéthane utilisé seul s'est révélé inefficace pour éliminer l'eau; même après une minute d'immersion, seulement une petite portion des trous peut¤¤ étant exempte d'eau.

<u>Exemple 2R</u> (de comparaison)

La procédure de l'exemple 1R a été répétée avec un bain constitué de 99,8 % en poids de 1,1-dichloro-1-fluoroéthane, de 0,124 % en poids d'acide nonanoïque et de 0,076 % en poids de nonylamine. Les pourcentages de trous exempts d'eau sont donnés dans le tableau I.

Ce bain, non conforme à l'invention, s'est révélé inefficace pour éliminer l'eau; même après une minute d'immersion, seulement une petite portion des trous peut être considérée comme étant exempte d'eau.

<u>Exemple 3</u> (conforme à l'invention)

La procédure de l'exemple 1R a été répétée avec un bain conforme à l'invention, constitué de 99,8 % en poids de 1,1-dichloro-1-fluoroéthane et de 0,2 % en poids d'un mélange d'imidazolines de formule générale 1-(2-hydroxyethyl)-2-($C_{11}H_{19-23}$)-2-imidazoline (vendu par la firme LAKELAND sous le nom IMIDAZOLINE 12OH). Les pourcentages de trous exempts d'eau sont donnés dans le tableau I.

Après une minute d'immersion, tous les trous peuvent être considérés comme étant exempts d'eau.

<u>Exemple 4</u> (conforme à l'invention)

La procédure de l'exemple 1R a été répétée avec un bain conforme à l'invention, constitué de 99,8 % en poids de 1,1-dichloro-1-fluoroéthane et de 0,2 % en poids d'un mélange d'imidazolines de formule générale 1-(2-aminoethyl)-2-($C_{11}H_{19-23}$)-2-imidazoline (vendu par la firme LAKELAND sous le nom IMIDAZOLINE 12NH). Les pourcentages de trous exempts d'eau sont donnés dans le tableau I.

Après une minute d'immersion, 72 % des trous peuvent être considérés comme étant exempts d'eau.

Exemple 5 (conforme à l'invention)

La procédure de l'exemple 1R a été répétée avec un bain conforme à l'invention, constitué de 99,8 % en poids de 1,1-dichloro-1-fluoroéthane et de 0,2 % en poids d'un mélange d'imidazolines de formule générale 1-(2-aminoethyl)-2-($C_{17}H_{31-35}$)-2-imidazoline (vendu par la firme SERVO sous le nom SERVAMIN®KOO 330). Les pourcentages de trous exempts d'eau sont donnés dans le tableau I.

Après une minute d'immersion, tous les trous peuvent être considérés comme étant exempts d'eau.

Exemple 6 (conforme à l'invention)

La procédure de l'exemple 1R a été répétée avec un bain conforme à l'invention, constitué de 99,8 % en poids de 1,1-dichloro-1-fluoroéthane et de 0,2 % en poids d'un mélange d'imidazolines de formule générale 1-(2-hydroxyethyl)-2-($C_{17}H_{31-35}$)-2-imidazoline (vendu par la firme SERVO sous le nom SERVAMIN®KOO 360). Les pourcentages de trous exempts d'eau sont donnés dans le tableau I.

Après une minute d'immersion, 98 % des trous peuvent être considérés comme étant exempts d'eau.

TABLEAU I

| Exemple | % de trous exempts d'eau après | | | |
|---|---|---|---|---|
| | 15 s | 30 s | 45 s | 60 s |
| Exemple 1R | 3 | 4 | 4 | 4 |
| Exemple 2R | 4 | 4 | 6 | 6 |
| Exemple 3 | 82 | 96 | 97 | 100 |
| Exemple 4 | 43 | 50 | 62 | 72 |
| Exemple 5 | 48 | 87 | 98 | 100 |
| Exemple 6 | 37 | 73 | 89 | 98 |

Exemple 7 (conforme à l'invention)

La procédure de l'exemple 1R a été répétée avec un bain conforme à l'invention, constitué de 96 % en poids de 1,1-dichloro-1-fluoroéthane, de 3,8 % en poids de méthanol et de 0,2 % en poids d'un mélange d'imidazolines de formule générale 1-(2-hydroxyethyl)-2-($C_{11}H_{19-23}$)-2-imidazoline (vendu par la firme LAKELAND sous le nom IMIDAZOLINE 12OH). Les pourcentages de trous exempts d'eau sont donnés dans le tableau II.

Après une minute d'immersion, 99 % des trous peuvent être considérés comme étant exempts d'eau.

Exemple 8 (conforme à l'invention)

La procédure de l'exemple 1R a été répétée avec un bain conforme à l'invention, constitué de 98 % en poids de 1,1-dichloro-1-fluoroéthane, de 1,8 % en poids d'éthanol et de 0,2 % en poids d'un mélange d'imidazolines de formule générale 1-(2-hydroxyethyl)-2-($C_{11}H_{19-23}$)-2-imidazoline (vendu par la firme LAKELAND sous le nom IMIDAZOLINE 12OH). Les pourcentages de trous exempts d'eau sont donnés dans le tableau II.

Après une minute d'immersion, 96 % des trous peuvent être considérés comme étant exempts d'eau.

Exemple 9 (conforme à l'invention)

La procédure de l'exemple 1R a été répétée avec un bain conforme à l'invention, constitué de 94 % en poids de 1,1-dichloro-1-fluoroéthane, de 3,7 % en poids de méthanol, de 2,1 % en poids d'acétate de méthyle et de 0,2 % en poids d'un mélange d'imidazolines de formule générale 1-(2-hydroxyethyl)-2-($C_{11}H_{19-23}$)-2-imidazoline (vendu par la firme LAKELAND sous le nom IMIDAZOLINE 12OH). Les pourcentages de trous exempts d'eau sont donnés dans le tableau II.

Après une minute d'immersion, 86 % des trous peuvent être considérés comme étant exempts d'eau.

TABLEAU II

| Exemple | % de trous exempts d'eau après | | | |
|---|---|---|---|---|
| | 15 s | 30 s | 45 s | 60 s |
| Exemple 7 | 64 | 87 | 96 | 99 |
| Exemple 8 | 53 | 83 | 91 | 96 |
| Exemple 9 | 44 | 69 | 79 | 86 |

Exemple 10 (conforme à l'invention)

La procédure de l'exemple 1R a été répétée avec un bain conforme à l'invention, constitué de 99,8 % en poids de 1,1-dichloro-1-fluoroéthane et de 0,2 % en poids du sel de formule générale 1-(2-hydroxyethyl)-2-($C_{17}H_{31-35}$)-2-imidazoline oléate (vendu par la firme RHONE-POULENC sous le nom de MIRAMINE®HDO). Les pourcentages de trous exempts d'eau sont donnés dans le tableau III.

Après 45 s d'immersion, tous les trous peuvent être considérés comme étant exempts d'eau.

Exemple 11 (conforme à l'invention)

La procédure de l'exemple 1R a été répétée avec un bain conforme à l'invention, constitué de 96 % en poids de 1,1-dichloro-1-fluoroéthane, de 3,8 % en poids de méthanol et de 0,2 % en poids du sel de formule générale 1-(2-hydroxyethyl)-2-($C_{17}H_{31-35}$)-2-imidazoline oléate (vendu par la firme RHONE-POULENC sous le nom de MIRAMINE®HDO). Les pourcentages de trous exempts d'eau sont donnés dans le tableau III.

Après 30 s d'immersion, tous les trous peuvent être considérés comme étant exempts d'eau.

TABLEAU III

| Exemple | % de trous exempts d'eau après | | | |
|---|---|---|---|---|
| | 15 s | 30 s | 45 s | 60 s |
| Exemple 10 | 89 | 99 | 100 | |
| Exemple 11 | 97 | 100 | | |

Exemple 12R (de comparaison)

Un tube en plastique recouvert de métal, d'un aspect brillant et lisse a été immergé dans de l'eau, de façon à le couvrir d'un film d'eau. Le tube a ensuite été plongé dans un bain constitué de 99,8 % en poids de 1,1-dichloro-1-fluoroéthane, de 0,124 % en poids d'acide nonanoïque et de 0,076 % en poids de nonylamine, à l'ébullition. Après 60 secondes d'immersion, on a sorti le tube du bain et on l'a soumis à un rinçage au moyen de 1,1-dichloro-1-fluoroéthane pur (comprenant deux immersions dans un bain liquide, à température d'ébullition, puis un traitement dans la phase vapeur). On a déterminé par un examen visuel si des gouttelettes d'eau étalent présentes sur sa surface.

Cette procédure (immersion dans de l'eau, trempage dans le bain, rinçage au moyen de 1,1-dichloro-1-fluoroéthane pur) a été répétée en utilisant le même bain, jusqu'au moment où celui a perdu son activité (ce qui fût décelé par la présence de gouttelettes d'eau sur la surface du tube).

Après à peine 5 cycles (immersion dans l'eau, trempage dans le bain, rinçage), des gouttelettes d'eau restaient présentes sur la surface du tube.

Exemple 13 (conforme à l'invention)

La procédure de l'exemple 12R a été répétée avec un bain conforme à l'invention, constitué de 99,8 % en poids de 1,1-dichloro-1-fluoroéthane et de 0,2 % en poids d'un mélange d'imidazolines de formule générale 1-(2-aminoethyl)-2-($C_{17}H_{31-35}$)-2-imidazoline (vendu par la firme SERVO sous le nom SERVAMIN®KOO 330).

Après 25 cycles (immersion dans l'eau, trempage dans le bain conforme à l'invention, rinçage), la surface du tube s'est révélée exempte d'eau.

Les résultats des observations faites dans les exemples 12R et 13, montrent que les compositions selon l'invention présentent l'avantage qu'elles se prêtent à un grand nombre d'utilisations successives sans perdre leur efficacité.

**Revendications**

**1.** Compositions comprenant du 1,1-dichloro-1-fluoroéthane et un agent tensioactif, caractérisées en ce que l'agent tensioactif comprend au moins une imidazoline.

**2.** Compositions selon la revendication 1, caractérisées en ce que l'imidazoline répond à la formule

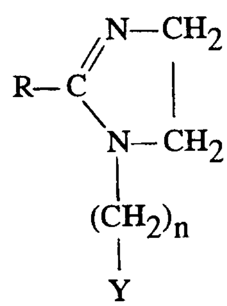

dans laquelle R représente une chaîne alkyle ou alcènyle, Y représente un groupement hydroxyle ou amino et n est un nombre entier au moins égal à 1.

**3.** Compositions selon la revendication 2, caractérisées en ce que R est une chaîne alkyle ou alcènyle comprenant de 10 à 20 atomes de carbone.

**4.** Compositions selon la revendication 2 ou 3, caractérisées en ce que R comprend 11 ou 17 atomes de carbone et n est égal à 2.

**5.** Compositions selon la revendication 4, caractérisées en ce que R comprend 17 atomes de carbone et Y représente un groupement amino.

**6.** Compositions selon l'une quelconque des revendications 1 à 5, caractérisées en ce que l'imidazoline est sous la forme de base libre ou sous la forme de sel monocarboxylate.

**7.** Compositions selon l'une quelconque des revendications 1 à 6, caractérisées en ce qu'elles comprennent de 0,01 à 1 % en poids de l'imidazoline par rapport au poids du 1,1-dichloro-1-fluoroéthane.

**8.** Compositions selon l'une quelconque des revendications 1 à 7, caractérisées en ce qu'elles comprennent au moins un composé supplémentaire, différent du 1,1-dichloro-1-fluoroéthane et de l'imidazoline, sélectionné parmi les hydrocarbures halogénés, les alcools et les esters, en une quantité au maximum égale à 25 % en poids par rapport au poids du 1,1-dichloro-1-fluoroéthane.

**9.** Compositions selon l'une quelconque des revendications 1 à 7, caractérisées en ce qu'elles sont essentiellement constituées de 1,1-dichloro-1-fluoroéthane et de l'imidazoline.

**10.** Procédé d'élimination d'eau d'une surface solide, caractérisé en ce qu'on traite la surface avec une composition selon l'une quelconque des revendications 1 à 9.

Office européen des brevets

# RAPPORT DE RECHERCHE EUROPEENNE

Numero de la demande
EP 95 20 1193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-3 903 012 (D.A. BRANDRETH)<br>* colonne 6, ligne 38 - ligne 54; revendications; exemples *<br>--- | 1-4,6,9, 10 | C11D3/43<br>B01D12/00<br>F26B5/00<br>C23G5/028 |
| A | US-A-4 763 423 (P.B. KEMP)<br>* revendications *<br>--- | 1-3 | |
| A | DATABASE WPI<br>Section Ch, Week 9139<br>Derwent Publications Ltd., London, GB;<br>Class E13, AN 91-283994<br>& JP-A-03 186 305 (TOA GOSEI CHEM IND LTD) , 14 Août 1991<br>* abrégé *<br>--- | 1-4,10 | |
| A | DATABASE WPI<br>Section Ch, Week 9249<br>Derwent Publications Ltd., London, GB;<br>Class E16, AN 92-401770<br>& JP-A-04 297 427 (CENTRAL GLASS CO LTD) , 21 Octobre 1992<br>* abrégé *<br>----- | 1,10 | **DOMAINES TECHNIQUES RECHERCHES (Int.Cl.6)**<br>C11D<br>B01D |

Le présent rapport a été établi pour toutes les revendications

| Lieu de la recherche | Date d'achèvement de la recherche | Examinateur |
|---|---|---|
| LA HAYE | 29 Août 1995 | Grittern, A |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)